# EUROPEAN PATENT SPECIFICATION

(11) **EP 1 668 084 B1**
(45) Date of publication and mention of the grant of the patent: **26.08.2009**
(21) Application number: 04768324.8
(22) Date of filing: 02.09.2004
(51) Int. Cl.: C09D 11/00

(54) **A RADIATION CURABLE JET INK**
STRAHLUNGSHÄRTBARE STRAHLENTINTE
ENCRE PAR JET APTE AU SECHAGE PAR RAYONNEMENT

(30) Priority: 16.09.2003 GB 0321704; 12.05.2004 GB 0410625
(43) Date of publication of application: 14.06.2006
(73) Proprietor: Sun Chemical B.V., 1382 LV Weesp (NL)
(72) Inventor: SELMAN, Hartley David, Bristol BS31 2BU (GB); CAIGER, Nigel Anthony, Wookey Hole Somerset BA5 1BE (GB); WILSON, Derek Edward, Somerset BA5 3JX (GB)
(74) Representative: Denness, James Edward
(86) International application number: PCT/GB2004/003777
(87) International publication number: WO 2005/026270

(56) References cited:
- EP-A1- 0 465 039
- WO-A1-99/29788
- US-A- 6 114 406

## Description

The invention relates to a jet ink and to a method of ink-jet printing.

UV curing ink-jet printing has become a commercially accepted technology for producing graphic display and other products on rigid and thin flexible substrates. The advantages are printing direct from a computer, being able to economically print small print runs, and being able to easily customise individual images. Further advantages include the minimal down time between jobs and the robust performance of the printed product.

A limitation of the current technology is that conventional UV jet inks when cured have insufficient flexibility to cope with the extension required when a thick substrate is flexed or bent. This results in cracking of the cured ink layer.

Thick flexible substrates are important in the graphics market both for indoor and outdoor applications, for example, banner work and lorry curtain sides. The problem of cracking of the ink also arises when the substrate is rigid and is deformed or shaped after being printed.

Screen inks are known which have good flexibility when applied to highly flexible/deformable thick substrates. Solvent-based screen inks having excellent performance are know. UV curable screen inks with excellent performance are also known. However, screen inks do not have the advantages of a digital ink-jet process as described above.

Solvent-based wide format jet inks are known which can be used in digital printing, and perform on thick, flexible substrates. They are, however, not suitable for printing on some rigid substrates. Those solvent-based wide format jet inks release volatile materials and so have undesirable environmental consequences. Radiation curable jet inks do not release significant amounts of volatile solvents.

It is possible to improve the flexibility of cured UV curable jet inks by including materials such as polyethylene glycol diacrylate, but the film formed on curing is typically very soft and/or has poor durability.

US 6,114,406 discloses UV-curable jet ink compositions comprising polyfunctional alkoxylated or polyalkoxylated acrylate monomers, generally at a level of from 80% to 95% by weight, and, optionally, monofunctional monomers at preferred levels of up to 10% by weight.

EP 0 465 039 discloses ink jet inks comprising up to 70% by weight monofunctional monomers, up to 70% by weight difunctional monomers and up to 10% by weight tri-or high functional monomers.

There is therefore a need for a radiation curable jet ink which cures to give a film having good flexibility on thick flexible/deformable substrates - and which also has acceptable durability.

The invention provides a radiation curable jet ink comprising at least 65% by weight of one or more monofunctional ethylenically unsaturated monomers and 1 to 10% by weight of at least one tri- or higher functional ethylenically unsaturated monomer, and having a surface tension at 25°C of not more than 36 dynes/cm (1 dyne/cm = 0.001 N/m).

Inks according to the invention have unexpectedly been found to wet the substrate well and to give cured films which are flexible and have adequate durability.

Inks according to the invention have also been found to have desirably low viscosity. The viscosity of the ink at 25°C may be less than 100cP (1 cP = 0.001 Pa.s), preferably less than 50cP, more preferably less than 40cP. Advantageously, the inks have a viscosity in the range of 25 to 40cP, more preferably in the range of above 30cP and below 40cP.

The inks of the invention have a surface tension of not more than 36 dynes/cm when measured at 25°C. Preferably the inks have a surface tension in the range of 24 to 33 dynes/cm more preferably in the range of 24 to 30 dynes/cm at 25°C. The lower surface tension contributes to good wetting of the substrate by the ink which in turn gives improved bonding between the substrate and the cured ink film. The low surface tension may be achieved by selecting monomers which inherently have a low surface tension, for example, alkyl acrylate monomers or by including in the ink a wetting agent such as a fluorinated surfactant, for example a surfactant of the Fluorad range, marketed by 3M. Advantageously, the ink comprises between 0.02 and 1.0 wt% of a wetting agent. Advantageously the ink comprises a surfactant, especially a fluorinated surfactant. Especially advantageously, the ink comprises between 0.02 and 1 wt% of a surfactant.

The ink comprises at least 65% (based on the total weight of the ink) of one or more monofunctional monomers. The ink may comprise only one monofunctional monomer. Alternatively, the ink may comprise a mixture of two or more

monofunctional monomers, which when taken together are present in an amount of at least 65% by weight.

Optionally, the ink will comprise at least 70% by weight of the monofunctional ethylenically unsaturated monomer and, in some instances, at least 80% by weight.

Inks comprising very high levels of the monofunctional ethylenically unsaturated monomer tend to give cured films of insufficient durability. Preferably, the ink comprises not more than 95%, more preferably not more than 90% by weight of the one or more monofunctional ethylenically unsaturated monomers.

All percentages herein are by weight based on the total weight of the ink unless another meaning is clear from the context.

Ethylenically unsaturated monomers which are suitable for use in radiation curable jet inks are known to the skilled person. The monofunctional ethylenically unsaturated monomer is monofunctional in the sense that it has only one ethylenically unsaturated group which can take part in radiation-initiated polymerisation. The ethylenically unsaturated monofunctional monomer may be, for example, an acrylate or a methacrylate monomer, a vinyl monomer, for example N-vinyl caprolactam or N-vinyl pyrrolidone, a vinyl ether monomer, a styrene or a substituted styrene. A preferred group of such radiation curable compounds consists of tridecyl acrylate, cyclic TMP formal acrylate, 2(2-ethoxyethoxy)ethyl acrylate, isodecyl acrylate, tetrahydrofurfuryl acrylate, ethoxylated nonylphenolacrylate, Actilane 410 (aromatic monofunctional acrylate) (from Akzo Nobel), 2-phenoxyethyl acrylate, N-vinyl pyrrolidone and N-vinyl-2-caprolactam. Tridecyl acrylate and 2-phenoxyethyl acrylate are particularly preferred.

The types of radiation which may be used to cure the ink include UV, X-ray, gamma ray, and electron beam. Preferably, the ink is UV curable.

Preferably, the ink is such that it can be substantially fully cured, in use, by a UV source delivering a dose of less than 1000 mJ cm⁻², more preferably less than 800 mJ cm⁻² and optionally less than 700 mJ cm⁻².

The ink comprise at least one tri- or higher functional ethylenically unsaturated monomer. "Tri- or higher functional" is to be understood as referring to a monomer which has three or more functional groups which are capable of taking part in the radiation induced curing reaction, for example, acrylate or methacrylate groups. The ink comprises at least 1 wt%, preferably from 5 to 10 wt% of the tri- or higher functional monomer. Preferably, the at least one tri- or higher functional ethylenically unsaturated monomer is a tetra- , penta- or hexa- functional monomer. The inclusion of monomers having such high functionality promotes the curing of the ink such that good curing can be achieved at a lower radiation dose and/or lower initiator concentration than would be possible otherwise. The ink may also comprise one or more difunctional monomers.

The inks of the invention also optionally comprise a colourant which may be a dye or a pigment. The colourant may be present in an amount of from 0.1 to 10% by weight based on the total weight of the ink. The colourant is preferably a pigment which is optionally present in an amount of 1 to 8%, more preferably 3 to 6% by weight.

The ink may comprise one or more initiators, for example, a photoinitiator. In one embodiment, the ink is a UV curable ink and comprises from 0.1 to 20%, more preferably from 0.1 to 15%, especially preferably from 0.1 to 13% by weight of a photoinitiator. Preferably, the monomers are susceptible to free radical polymerisation and the photoinitiator is one which decomposes to provide free radicals. Alternatively, the monomers are polymerisable via a cationic polymerisation in which case the photoinitiator will be one which produces cations upon irradiation.

For some applications, for example, where the curing is by electron beam, the ink need not comprise an initiator.

Components of the ink which are volatile and which do not take part in the curing of the ink and which therefore do not become part of the cross-linked cured ink film are likely to evaporate, with undesirable environmental consequences.

Preferably, the ink comprises less than 3%, more preferably less than 1% by weight of such volatile non-curing compounds, especially volatile organic compounds. For present purposes, a compound is regarded as volatile if it is sufficiently volatile to evaporate under normal printing conditions or thereafter. Accordingly, the ink preferably comprises less than 3%, more preferably less than 1% by weight of any compound or compounds having a boiling point below 170°C.

Preferably, the ink is a non-conductive ink. Such non-conductive inks will preferably comprise no more than 0.5% by weight of any component which imparts electrical conductivity to the ink, for example, an oil soluble salt. In some cases, however, it will be desired that the ink is conductive, in which case it will preferably comprise from 1 to 20% by weight of a component which imparts conductivity to the ink.

The ink may also comprise one or more components such as dispersants and stabilisers which are known for use with conventional radiation curable jet inks.

The inclusion in jet inks of a monomer comprising a higher alkyl group is known to give improved weatherability as compared to a similar ink not comprising a monomer having a higher alkyl group. The term "higher alkyl group" as used herein refers to any alkyl group, which may be linear or branched, which comprises 6 or more carbon atoms (not including carbon atoms present in the monomer which are not part of the alkyl group). Unexpectedly, in the inks of the invention, the inclusion of a monomer comprising an aromatic group (referred to herein as "aromatic monomers") has been found to improve weatherability to a greater extent. Ethoxylated nonylphenolacrylate, Actilane 410 (aromatic monofunctional acrylate), and 2-phenoxyethyl acrylate are suitable aromatic monomers.

Preferably, the ink comprises from 5 to 50 %, more preferably from 10 to 40% and optionally from 15 to 40%, of the aromatic monomer.

Advantageously, the compositions of the substrate and the jet ink are such that the substrate is swellable by the jet ink. Swelling of the substrate upon contact with the ink jet ink is believed to promote the adhesion of the dried or cured ink jet ink to the substrate.

Assessment of whether or not a jet ink is suitable for swelling a substrate may be carried out as follows: i) wipe a layer of the coloured jet ink onto the substrate; ii) leave the whole for a time period (e.g. 60 seconds); and iii) wipe the ink off. If the area which was in contact with the ink shows a change in colouration, the jet ink has swollen the substrate.

Ink compositions which are suitable for swelling a certain substrate may be arrived at by including in the ink one or more monomers which swell that substrate and therefore the ink preferably comprises a monomer which is suitable for swelling the substrate. Monomers that are suitable for swelling polyvinyl chloride include tetrahydrofurfuryl acrylate, 1,6-hexane diol diacrylate, and N vinyl-2-caprolactam. Polycarbonate is swelled by those monomers, but also by propoxylated neopentyl glycol diacrylate, 2-phenoxylethyl acrylate, 2-(2-ethoxyethoxy)ethyl acrylate, and polyethylene glycol (400) diacrylate, for example.

Preferably, the ink comprises between 5 and 90 %, more preferably between 10 and 40%, by weight of the substrate swelling monomer or monomers.

Preferably, the ink comprises no more than 20%, more preferably no more than 5% by weight of high Tg monomers. The term 'high Tg monomers' refers to monomers, the homopolymers of which have a Tg (glass transition temperature) of at least 50°C. The presence of such high Tg monomers is believed to lower the flexibility of the cured ink. Preferably, the ink comprises less than 10%, preferably less than 5% by weight of high Tg monofunctional monomers.

The invention also provides a method of ink jet printing, comprising the steps of ink jet printing an ink according to the invention onto a substrate and exposing the ink to radiation thereby forming an at least partially cured ink layer. Advantageously, the substrate has a thickness of at least 0.2 mm. Advantageously, the substrate has a thickness of less than 2 mm.

Advantageously, the substrate is a flexible substrate. The term "flexible substrate" as used herein is one which can undergo the flexibility test given below for the reinforced vinyl substrate of Example 1 without itself cracking (regardless of cracking of any ink on the surface of the substrate) and without showing permanent deformation.

The substrate may be a rigid substrate and the method may include the further step of deforming the substrate and the at least partially cured image, for example, by vacuum forming. Products made by such processes include point of sale displays and advertising items.

The inks of the invention have been found to have, in general, a low viscosity as compared to conventional UV-curable jet inks. In practice, this allows the printer head to be operated at a lower temperature which leads to a reduction in the degree of premature curing in the printer head, thereby reducing the need for maintenance of the printer head. Advantageously, the temperature of the printer head is 60°C or lower, more preferably 50°C or lower.

The presence of the tri- or higher functional monomer promotes the curing of the ink such that very high radiation doses are not required. For example, the radiation is optionally UV radiation of a dose of less than 1000 mJ cm⁻², preferably less than 800 mJ cm⁻², more preferably less than 700 mJ cm⁻².

The invention also provides a printed object comprising a substrate having on at least one surface the cured product of an ink according to the invention.

Examples of the invention will now be described for the purposes of illustration only.

### Example 1. Inks having a high level of monofunctional monomer - with and without an aromatic monomer

**Table 1. Ink formulations with and without an aromatic monomer**

| **Material** | | |
|---|---|---|
| | Without Aromatic Monomer | With Aromatic Monomer |
| Ink Code | 87-2 | 87-4 |
| Tridecyl Acrylate | 39.0 | 0 |
| 1- Vinyl-2-Caprolactam | 26.0 | 26.0 |
| Propoxylated Neopentyl Glycol | 15.9 | 15.9 |
| Diacrylate | | |
| DipentaErythritol Penta Acrylate | 6.0 | 6.0 |
| Isopropyl Thoixanthone | 2.0 | 2.0 |
| 4-Phenyl Benzophenone | 1.5 | 1.5 |
| 2-Benzyl-2-Dimethylamino-1-(4-morpholinophenyl)-butanone-1 | 2.0 | 2.0 |
| Amino Benzoate | 3.0 | 3.0 |
| Surfactant (FluoradFC430) | 0.3 | 0.3 |
| Phenoxy Ether Acrylate | 0 | 39.0 |
| Pigment Blue 15:3 | 3.0 | 3.0 |
| Blue Synergist (Solsperse 5000 ) | 0.1 | 0.1 |
| Dispersant from Avecia (Solsperse 32000) | 1.2 | 1.2 |
| Viscosities @ 50C (cP) | 10.1 | 13.5 |

Two inks were made according to the compositions given in table 1 and drawndown side by side. Drawdowns were made on an exterior grade self adhesive vinyl-Fascal 900 from Avery. Rectangles of 120mm by 80mm were first cut. The drawdowns were made on an RK Printcoat KCC 101 automated drawndown rig, with a No. 3 K-Bar. (24u rated.) The drawdowns were then immediately passed through a Fusion LC6E lab conveyor unit with a F300S lamp system fitted. An iron doped lamp was used in this unit (120 W/cm). The drawdowns received 600mJ/cm² of UV radiation, and were then left for 30 minutes. A central area coated in ink was cut from each drawdown and placed in a Q-Sun 1000 Xenon Test Chamber, from Q-Panel Lab Products.

The drawdown was then subjected to light and water cycles and the print quality was assessed after set time periods. Results are given in table 2.

**Table 2. Weatherability results for inks with and without an aromatic monomer.**

| | Print Quality and Yellowing Level | |
|---|---|---|
| | 400 hours | 800 hours |
| Without Aromatic Monomer | Greyscale 4 Slight fading | Greyscale 3-4, fading, loss of gloss |
| With Aromatic Monomer | Greyscale 4 Slight fading | Greyscale 4, slight fading |

### Example 2. Incorporation of a substrate-swelling monomer

Inks were prepared to the formulations in Table 3. (The pigment was bead milled with the dispersant a proportion of propoxylated neopentyl glycol diacrylate equal to 100% of the weight of pigment.)

Viscosities were measured using a Brookfield LV DV-III Viscometer, with water jacket, and a No. 18 spindle.

Drawdowns were made on a rigid vinyl substrate - Pentawhite Gloss rigid PVC 240µm from Robert Horne Ltd. Drawdown, cure and delay times were as described in Example 1.

Cross hatch adhesion tests ( ASTM D 3359 ) were then performed using a scalpel and a severe adhesion test tape. (Cellulose Splice Tape Red No 139. Code No 1112 25mm x 66m 3" core Swiss Quality from Scapa Tapes.)

Results are given in table 4.

**Table 3. Ink formulations with and without a substrate-swelling monomer**

| Material | | | | | |
|---|---|---|---|---|---|
| | With Swelling Monomer | Without Swelling Monomer | Without Swelling Monomer | Without Swelling Monomer | Without Swelling Monomer |
| Ink Code | 110-1 | 110-3 | 110-4 | 110-5 | 110-6 |
| Tridecyl Acrylate | 39.0 | 39.0 | 65.0 | 39.0 | 39.0 |
| 1- Vinyl-2-Caprolactam | 26.0 | 0 | 0 | 0 | 0 |
| Propoxylated Neopentyl Glycol Diacrylate | 15.9 | 15.9 | 15.9 | 15.9 | 15.9 |
| DipentaErythritol Penta Acrylate | 6.0 | 6.0 | 6.0 | 6.0 | 6.0 |
| Isopropyl Thoixanthone | 2.0 | 2.0 | 2.0 | 2.0 | 2.0 |
| 4-Phenyl Benzophenone | 1.5 | 1.5 | 1.5 | 1.5 | 1.5 |
| 2-Benzyl-2-Dimethylamino-1-(4-morpholinophenyl)-butanone-1 | 2.0 | 2.0 | 2.0 | 2.0 | 2.0 |
| Amino Benzoate | 3.0 | 3.0 | 3.0 | 3.0 | 3.0 |
| Cyclic TMP Formal Acrylate | 0 | 26.0 | 0 | 0 | 0 |
| 2(2-Ethoxyethoxy) Ethyl Acrylate | 0 | 0 | 0 | 26.0 | 0 |
| Isodecyl Acrylate | 0 | 0 | 0 | 0 | 26.0 |
| Surfactant (FluoradFC430) | 0.3 | 0.3 | 0.3 | 0.3 | 0.3 |
| Pigment Blue 15:3 | 3.0 | 3.0 | 3.0 | 3.0 | 3.0 |
| Blue Synergist (Solsperse 5000 ) | 0.1 | 0.1 | 0.1 | 0.1 | 0.1 |
| Dispersant from Avecia (Solsperse 32000) | 1.2 | 1.2 | 1.2 | 1.2 | 1.2 |
| Viscosities @ 50°C (cP) | 9.8 | 11.8 | 8.7 | 7.6 | 7.8 |

**Table 4. Adhesion test results for inks with and without a substrate-swelling monomer**

| Ink Code | | Monomer | ASTM D3359 Result/ Rigid Vinyl/ 300mJ (5B = No removal) (OB=>65% removal) |
|---|---|---|---|
| 110/1 | With Substrate Swelling Monomer | 1-Vinyl-2-Caprolactam | 5B |
| 110/3 | Without Substrate Swelling Monomer | Cyclic TMP Formal Acrylate | 3B |
| 110/4 | Without Substrate Swelling Monomer | Tridecyl Acrylate | 3B |
| 110/5 | Without Substrate Swelling Monomer | 2(2-Ethoxyethoxy) Ethyl Acrylate | 0B |
| 110/6 | Without Substrate Swelling Monomer | Isodecyl Acrylate | 3B |

### Example 3. Viscosity reduction, and consequent reduction in Jetting Temperature, obtained with Higher Levels of Monofunctional Monomer.

**Table 5. Formulation variations with high and low levels of monofunctional monomer.**

| Material | | |
|---|---|---|
| | 25 % | 65% |
| Ink Code | 87-6 | 87-2 |
| Tridecyl Acrylate | 15.0 | 39.0 |
| 1-vinyl-2-caprolactam | 10.0 | 26.0 |
| Propoxylated Neopentyl Glycol Diacrylate | 55.9 | 15.9 |
| DipentaErythritol Penta Acrylate | 6.0 | 6.0 |
| Isopropyl Thoixanthone | 2.0 | 2.0 |
| 4-Phenyl Benzophenone | 1.5 | 1.5 |
| 2-Benzyl-2-Dimethylamino-1-(4-morpholinophenyl)-butanone-1 | 2.0 | 2.0 |
| Amino Benzoate | 3.0 | 3.0 |
| Surfactant (FluoradFC430) | 0.3 | 0.3 |
| Pigment Blue 15:3 | 3.0 | 3.0 |
| Blue Synergist (Solsperse 5000 ) | 0.1 | 0.1 |
| Dispersant from Avecia (Solsperse 32000) | 1.2 | 1.2 |
| Viscosities @ 50C (cP) | 17.0 | 10.1 |

Inks were prepared to the formulations in Table 5. (The pigment was bead milled with the dispersant and a proportion of propoxylated neopentyl glycol diacrylate, equal to 100% of the weight of the pigment.) Viscosities were measured using a Brookfield LV DV-III Viscometer, with water jacket, and a No. 18 spindle. Results are given in table 6.

**Table 6. Viscosities of inks having 25% and 65% monofunctional monomer.**

| | Percentage Monofunctional Monomer | |
|---|---|---|
| | 25% | 65% |
| | 87-6 | 87-2 |
| Visc. @ 50 C | 17Cp | 10.1cP |
| Jetting Temp. for 10cP | 70C | 50C |
| | | |

### Comparative Example 4. Commercially Available Inks on Flexible Substrates and Deformable Substrates

A number of commercially available inks were applied to a flexible substrate and to a deformable substrate in order to assess their degree of flexibility.

Drawdowns were made on a flexible reinforced vinyl substrate - Vulite B 372930 obtained from Ultraflex Systems Incorporated. Rectangles of 120mm by 80mm were first cut. The drawdowns were made on an RK Printcoat KCC 101 automated drawdown rig, with a No. 3 K-Bar.(24u rated.)
The drawdowns were then immediately passed through a Fusion LC6E lab conveyor unit with a F300S lamp system fitted. An iron doped lamp was used in this unit (120 W/cm)

The drawdowns received 600 mJ/cm² of UV radiation, as measured by an International Light IL 390 C UV dose meter.

A second set of drawdowns were made on a rigid and permanently deformable substrate - Acrylonitrile Butadiene Styrene (ABS). Panels of this material of 0.81mm thickness, and measuring 53mm by 85mm were used. A No. 3 K-Bar was again used for the drawdowns and curing conditions were as described above.

Both sets of drawdowns were then left for 30 minutes, after which the following flexibility test was performed.

On the reinforced vinyl, the flexibility was measured by taking opposite corners of the printed rectangles, and folding them to form a rectangle half of the original size, with the ink layer on the outside, bringing the two inside faces in contact with each other with finger pressure, at a decreasing distance from the fold line, until the inside faces are in contact with each other at a distance equal to, and not less than 3mm from the fold line.

The folded vinyl sheet was then held in this position for 5 seconds. The level of ink cracking on the fold was then assessed visually, (whilst still being held folded). The level of white area, showing the substrate underneath, was used as a measure of the level of cracking. Less white area showed that there was less cracking. The presence or absence of white areas was recorded.

On the ABS substrate, the flexibility was assessed in the same way, except that the inside faces were brought together only until the angle between them was 45 degrees.

For both substrates, a pass was given if no cracking was seen on the fold / bend.

A fail was given if white areas, showing the substrate below, were seen. Results are given in Table 7.

**Table 7. Commercially available inks and flexibility test results**

| Supplier | Ink Code | Level Of Monofunctional (Not greater than:) | Colour | Flex - Vinyl | Flex-ABS |
|---|---|---|---|---|---|
| Sunjet | Crystal UGE 5529 | 15 % | Cyan | Fail | Fail |
| Sericol | Uvijet Cyan | 30% | Cyan | Fail | Fail |
| 3M | PressVu UV | 30% | Cyan | Fail | Fail |
| Avecia | UV Ink | 50% | Magenta | Fail | Fail |

### Example 5. Effect of varying the concentration of the monofunctional monomer

**Table 8. Ink compositions of varying monofunctional monomer level**

| Material | Level of Monofunctional Monomer | | | | | | |
|---|---|---|---|---|---|---|---|
| | 25 % | 50% | 60% | 65% | 75% | 85% | 90% |
| Ink Code | 87-6 | 87-7 | 87-1 | 87-2 | 87-8 | 87-9 | 87-3 |
| Tridecyl Acrylate | 15.0 | 30.0 | 36.0 | 39.0 | 45.4 | 51.8 | 55.0 |
| 1- Vinyl 2-Caprolactam | 10.0 | 20.0 | 24.0 | 26.0 | 29.6 | 33.2 | 35.0 |
| Propoxylated Neopentyl Glycol Diacrylate | 55.9 | 30.9 | 20.9 | 15.9 | 9.86 | 3.81 | 0.79 |
| DipentaErythritol Penta Acrylate | 6.0 | 6.0 | 6.0 | 6.0 | 3.6 | 1.2 | 0 |
| Isopropyl Thoixanthone | 2.0 | 2.0 | 2.0 | 2.0 | 2.0 | 2.0 | 2.0 |
| 4-Phenyl Benzophenone | 1.5 | 1.5 | 1.5 | 1.5 | 1.5 | 1.5 | 1.5 |
| 2-Benzyl-2-Dimethylamino-1-(4-morpholinophenyl)-butanone-1 | 2.0 | 2.0 | 2.0 | 2.0 | 2.0 | 2.0 | 2.0 |
| Amino Benzoate | 3.0 | 3.0 | 3.0 | 3.0 | 3.0 | 3.0 | 3.0 |
| Surfactant (FluoradFC430) | 0.3 | 0.3 | 0.3 | 0.3 | 0.3 | 0.3 | 0.3 |
| Pigment Blue 15:3 | 3.0 | 3.0 | 3.0 | 3.0 | 1.92 | 0.84 | 0.3 |
| Blue Synergist (Solsperse 5000 ) | 0.1 | 0.1 | 0.1 | 0.1 | 0.06 | 0.03 | 0.01 |
| Dispersant from Avecia (Solsperse 32000) | 1.2 | 1.2 | 1.2 | 1.2 | 0.76 | 0.32 | 0.1 |
| Viscosities @ 50C (cP) | 17.0 | 12.6 | 11.2 | 10.1 | 7.58 | 5.06 | 3.8 |

### Experimental

Inks were prepared to the formulations in table 8. (The pigment was bead milled with the dispersant and a proportion of propoxylated neopentyl glycol diacrylate equal to 100% of the weight of pigment.) Viscosities were measured using a Brookfield LV DV-III Viscometer, with water jacket, and a No. 18 spindle.

Drawdowns were made on the flexible reinforced vinyl substrate - Vulite B 372930. A second set of drawdowns were made on the rigid and permanently deformable substrate - Acrylonitrile Butadiene Styrene (ABS) blanks. Drawdown, cure and delay periods were as described in Example 4. A third set of drawdowns were made onto '400 Permanent White' self adhesive vinyl from Avery Graphics.

Flexibility tests were then carried out, again as described in Example 4. Durability tests were then performed using the third set of drawdowns and a Patra rub tester. The abrading surface was Glass Fibre filter paper, grade GFA from Whatmann. 100 rubs were made, and the condition of the drawdown surface was noted. Results are given in table 9.

**Table 9. Flexibility and durability results for different levels of mono functional monomers**

| | | Level of monofunctional monomer | | | | | | |
|---|---|---|---|---|---|---|---|---|
| | | 25% | 50% | 60% | 65% | 75% | 85% | 90% |
| Ink Code | | 87-6 | 87-7 | 87-1 | 87-2 | 87-8 | 87-9 | 87-3 |
| Flexibility | Reinforced Vinyl | Fail | Fail | Fail | Pass | Pass | Pass | Pass |
| Flexibility | ABS Blanks | Fail | Fail | Fail | Pass | Pass | Pass | Pass |
| Durability | Smooth Vinyl | Pass-slight mark | Pass-slight mark | Pass-slight mark | Pass-slight mark | Pass-slight mark | Pass-slight mark | Borderline- More severe marking |

## Claims

1. A radiation curable jet ink comprising at least 65% by weight of one or more monofunctional ethylenically unsaturated monomers and also comprising 1 to 10% by weight of at least one tri- or higher functional ethylenically unsaturated monomer, and having a surface tension at 25°C of not more than 36 dynes/cm (0.036 N/m).

2. A jet ink as claimed in claim 1 which comprises not more than 90% by weight of the one or more monofunctional ethylenically unsaturated monomers.

3. A jet ink as claimed in claim 1 or claim 2 which comprises one or more monofunctional acrylate monomers.

4. A jet ink as claimed in any of claims 1 to 3 in which the at least one tri- or higher functional ethylenically unsaturated monomer is present in an amount of 5 to 10% by weight.

5. A jet ink as claimed in any of claims 1 to 4 in which the at least one tri- or higher functional ethylenically unsaturated monomer is a tetra-, penta- or hexafunctional monomer

6. A jet ink as claimed in any of claims 1 to 5 which comprises a monomer comprising an aromatic group.

7. A jet ink as claimed in any of claim 1 to 6 having a viscosity in the range of 25 to 40 cPs (0.025 to 0.040 Pa.s) at 25°C.

8. A jet ink as claimed in any of claims 1 to 7 which comprises no more than 5% in total of a high Tg monomer or monomers.

9. A method of ink jet printing, comprising the steps of ink jet printing an ink as claimed in any of claims 1 to 8 onto a substrate and exposing the ink to radiation thereby forming an at least partially cured ink layer.

10. A method as claimed in claim 9 wherein the substrate has a thickness of at least 0.2 mm.

11. A method as claimed in claim 9 or claim 10 wherein the substrate is a flexible substrate.

12. A method as claimed in claim 9 or claim 10 in which the substrate is a rigid substrate and in which the method further includes the step of deforming the substrate and the at least partially cured ink layer.

13. A method as claimed in any of claims 9 to 12 wherein the ink comprises a monomer suitable for swelling the substrate.

14. A method as claimed in any of claims 9 to 13 in which the print head temperature is 60°C or lower.

15. A method as claimed in any of claims 9 to 14 in which the radiation is UV light having a dose of less than 1000 mJ cm⁻².

16. A printed object comprising a substrate having on at least one surface the cured product of an ink according to any of claims 1 to 9.

## Patentansprüche

1. Eine durch Strahlung härtbare Jet-Tinte, die mindestens 65 Gew.-% von einem oder mehr als einem monofunktionalen ethylenisch ungesättigten Monomer umfasst und ferner 1 bis 10 Gew.-% von mindestens einem trifunktionalen oder höher funktionalen ethylenisch ungesättigten Monomer umfasst und eine Oberflächenspannung bei 25 °C von nicht mehr als 36 dyn/cm (0,036 N/m) aufweist.

2. Eine Jet-Tinte nach Anspruch 1, die nicht mehr als 90 Gew.-% von dem einen oder mehr als einen monofunktionalen ethylenisch ungesättigten Monomer umfasst.

3. Eine Jet-Tinte nach Anspruch 1 oder Anspruch 2, die ein oder mehr als ein monofunktionales Acrylat-Monomer umfasst.

4. Eine Jet-Tinte nach einem der Ansprüche 1 bis 3, wobei das mindestens eine trifunktionale oder höher funktionale ethylenisch ungesättigte Monomer in einer Menge von 5 bis 10 Gew.-% vorhanden ist.

5. Eine Jet-Tinte nach einem der Ansprüche 1 bis 4, wobei das mindestens eine trifunktionale oder höher funktionale ethylenisch ungesättigte Monomer ein tetra-, penta- oder hexafunktionales Monomer ist.

6. Eine Jet-Tinte nach einem der Ansprüche 1 bis 5, die ein Monomer umfasst, das eine aromatische Gruppe umfasst.

7. Eine Jet-Tinte nach einem der Ansprüche 1 bis 6, die eine Viskosität in dem Bereich von 25 bis 40 cPs (0,025 bis 0,040 Pa s) bei 25 °C aufweist.

8. Eine Jet-Tinte nach einem der Ansprüche 1 bis 7, die nicht mehr als insgesamt 5 % von einem oder mehr als einem Monomer mit hohem Tg umfasst.

9. Ein Verfahren zum Tintenstrahldrucken, das die Schritte des Tintenstrahldruckens einer Tinte nach einem der Ansprüche 1 bis 8 auf einen Träger und Aussetzen der Tinte gegenüber Strahlung umfasst, wodurch eine mindestens teilweise gehärtete Tintenschicht gebildet wird.

10. Ein Verfahren nach Anspruch 9, wobei der Träger eine Dicke von mindestens 0,2 mm aufweist.

11. Ein Verfahren nach Anspruch 9 oder Anspruch 10, wobei der Träger ein flexibler Träger ist.

12. Ein Verfahren nach Anspruch 9 oder Anspruch 10, wobei der Träger ein starrer Träger ist und wobei das Verfahren ferner den Schritt der Verformung des Trägers und der mindestens teilweise gehärteten Tintenschicht einschließt.

13. Ein Verfahren nach einem der Ansprüche 9 bis 12, wobei die Tinte ein zur Quellung des Trägers geeignetes Monomer umfasst.

14. Ein Verfahren nach einem der Ansprüche 9 bis 13, wobei die Temperatur des Druckkopfes 60 °C oder weniger beträgt.

15. Ein Verfahren nach einem der Ansprüche 9 bis 14, wobei die Strahlung UV-Licht mit einer Dosis von weniger als 1000 mJ cm⁻² ist.

16. Ein bedruckter Gegenstand, der einen Träger umfasst, der auf mindestens einer Oberfläche das gehärtete Produkt einer Tinte nach einem der Ansprüche 1 bis 9 aufweist.

## Revendications

1. Encre pour jet d'encre, durcissable par rayonnement, comprenant au moins 65 % en poids d'un ou plusieurs monomères à insaturation éthylénique monofonctionnels et comprenant également 1 à 10% en poids d'au moins un monomère à insaturation éthylénique trifonctionnel ou de fonctionnalité supérieure, et présentant une tension superficielle à 25°C de pas plus de 36 dynes/cm (0,036 N/m).

2. Encre pour jet d'encre selon la revendication 1, qui comprend pas plus de 90% en poids du ou des monomères à insaturation éthylénique monofonctionnels.

3. Encre pour jet d'encre selon la revendication 1 ou la revendication 2, qui comprend un ou plusieurs monomères acrylates monofonctionnels.

4. Encre pour jet d'encre selon l'une quelconque des revendications 1 à 3, dans laquelle le au moins un monomère à insaturation éthylénique trifonctionnel ou de fonctionnalité supérieure est présent dans une quantité de 5 à 10% en poids.

5. Encre pour jet d'encre selon l'une quelconque des revendications 1 à 4, dans laquelle le au moins un monomère à insaturation éthylénique trifonctionnel ou de fonctionnalité supérieure est un monomère tétra-, penta- ou hexafonctionnel.

6. Encre pour jet d'encre selon l'une quelconque des revendications 1 à 5, qui comprend un monomère comprenant un groupe aromatique.

7. Encre pour jet d'encre selon l'une quelconque des revendications 1 à 6, ayant une viscosité dans la plage de 25 à 40 cPs (0,025 à 0,040 Pa.s) à 25°C.

8. Encre pour jet d'encre selon l'une quelconque des revendications 1 à 7, qui comprend pas plus de 5% au total d'un monomère ou de monomères à Tg élevée.

9. Procédé d'impression pour jet d'encre d'encre, comprenant les étapes d'impression par jet d'encre d'une encre selon l'une quelconque des revendications 1 à 8 sur un substrat, et d'exposition de l'encre à un rayonnement, permettant ainsi de former une couche d'encre au moins partiellement durcie.

10. Procédé selon la revendication 9, dans lequel le substrat a une épaisseur d'au moins 0,2 mm.

11. Procédé selon la revendication 9 ou la revendication 10, dans lequel le substrat est un substrat flexible.

12. Procédé selon la revendication 9 ou la revendication 10, dans lequel le substrat est un substrat rigide, et dans lequel le procédé comprend en outre l'étape de déformation du substrat et de la couche d'encre au moins partiellement durcie.

13. Procédé selon l'une quelconque des revendications 9 à 12, dans lequel l'encre comprend un monomère approprié pour gonfler le substrat.

14. Procédé selon l'une quelconque des revendications 9 à 13, dans lequel la température de tête d'impression est de 60°C ou moins.

15. Procédé selon l'une quelconque des revendications 9 à 14, dans lequel le rayonnement est une lumière UV ayant une dose de moins de 1000 mJ.cm⁻².

16. Objet imprimé comprenant un substrat ayant sur au moins une surface le produit durci d'une encre selon l'une quelconque des revendications 1 à 9.
